# EUROPEAN PATENT APPLICATION

(11) **EP 0 733 509 A1**
(43) Date of publication of application: **25.09.1996**
(21) Application number: 95104174.8
(22) Date of filing: 22.03.1995
(51) Int. Cl.: B60N 2/44, B60N 2/48

(54) **A safety nap cushion for use with a chair back**

(71) Applicant: Wang, Ful-Lang, Taipei, Taiwan (TW)
(72) Inventor: Wang, Ful-Lang, Taipei, Taiwan (TW)
(74) Representative: Rüger, Rudolf, Dr.-Ing.

(57) **Abstract**

Disclosed is a safety nap cushion for use with a chair back mainly consisting of a reverse U-shaped soft back cushion (1) having a central opening, two properly curved inflatable side cushions (2) thermally-sealed to two front sides of the back cushion (1) to softly and fitly confine a user's head therebetween, and a length-adjustable retaining strap (3) detachably attached to the back cushion (1) and suitable for being pivotally turned to a position in front of the side cushions (2) to fitly confine the latter and prevent the latter from swaying laterally under pressure. The back cushion (1) is fixly attached to a chair back by engaging hook members (13) with retaining rings (21) provided at its two sides. The side cushions (2) each has a properly curved inner side surface and are so designed that a smooth curve is formed at a lower joint between the back cushion (1) and the two side cushions (2) to comfortably support the user's head.

## Description

### BACKGROUND OF THE INVENTION

The present invention relates to a safety nap cushion for use with a chair back, and more particularly to a safety nap cushion which softly contacts with the user's two cheeks.

In an airplane, the cabins are generally divided into the economy class and the first class. The difference between these two classes is mainly in the comfort of the seats. The seats in the economy class cabin are simple and narrower in design and do not give the passengers much room to move or stretch the body. The seats in the first class cabin are designed to provide higher comfort and are therefore wider and meet the principle of ergonomics. However, neither the economy nor the first class seats can allow the users to nap comfortably when they travel on the plane for a long time. Although the seats in the first class cabin are wider than the seats in the economy class cabin, a napped or asleep passenger in the seat may still fall aslant to one side and unawares disturbs the neighbor passenger, not to mention when sitting in a narrower economy class seat. Moreover, napping or sleeping with the neck falling aslant to one side tends to easily cause a sore and stiff neck. Therefore, it is desirable to develop and provide a means on which a passenger travelling on a plane or a long distance bus may rest his or her head for a nice sleep or nap.

### SUMMARY OF THE INVENTION

It is a primary object of the present invention to provide a safety nap cushion for use with a chair back which may softly contact the user's two cheeks and thereby allows the user to nap or sleep in the seat in a carefree, stable, and completely relaxed position.

### BRIEF DESCRIPTION OF THE DRAWINGS

Fig. 1 is a perspective view showing the safety nap cushion for use with a chair back according to the present invention;
Fig. 2 illustrates an embodiment of the manner in which the present invention is used; and
Fig. 3 illustrates another embodiment of the manner in which the present invention is used.

### DETAILED DESCRIPTION OF THE PREFERRED EMBODIMENTS

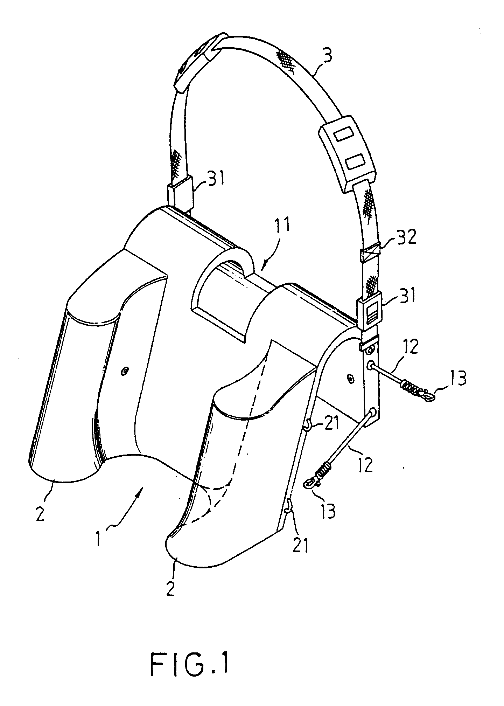

Please refer to Fig. 1. The safety nap cushion for use with a chair back according to the present invention mainly consists of a soft back cushion 1 which can be bent to be
reverse U-shaped and includes a front portion and a rear portion and has a through opening 11 formed at a predetermined position between the front and the rear portions thereof, two properly curved inflatable side cushions 2 being thermally sealed to a top surface of the front portion of the back cushion 1 at each side thereof, and a pivotally movable retaining strap 3 connected at two lower ends to two outer side surfaces of the rear portion of the back cushion 1 by means of buckles 31.

The back cushion 1 is provided at each lateral side of the rear portion with two string members 12 which each has a hook member 13 connected to a free end thereof, and at each lateral side of the front portion with two retaining rings 21 corresponding to and for receiving the two string members 12 and hook members 13 on the rear portion. The retaining strap 3 is fixed at two lower ends to points adequately above the two pairs of string members 12 and is provided with an adjusting buckle 32 to adjust the length of the strap 3 itself.

The side cushions 2 each has a properly curved inner side surface and are so designed that a smooth curve is formed at a lower joint between the back cushion 1 and the two side cushions 2.

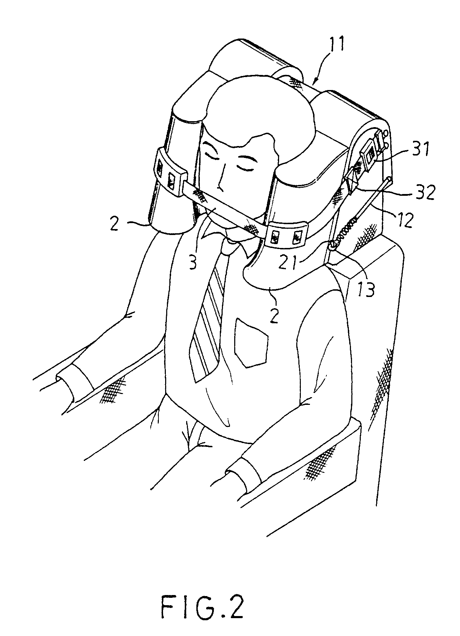

To use the safety nap cushion of the present invention, first inflate the two side cushions 2 to a desired softness, put the back cushion 1 over a chair back with the side cushions 2 facing forward and the through opening 11 facing upward, as shown in Fig. 2. Then, engage the hook members 13 on the string members 12 with the corresponding retaining rings 21 so that the safety nap cushion is properly attached to the top of the chair back. To prevent the two inflated but flexible side cushions 2 from swaying sidewardly when they are under pressure, move the retaining strap 3 so that it is pivotally turned from a back position to a position in front of the two side cushions 2 and thereby encloses and confine the latter within the strap 3. Use the adjusting buckle 32 to adjust the retaining strap 3 to a desired length, causing the two side cushions 2 to fitly attach to the user's two cheeks.

The retaining strap 3 is provided on its surface with two slidable pads 33 which is wider than the retaining strap 3 to enlarge the areas the retaining strap 3 contacts with an outer surface of the side cushions 2.

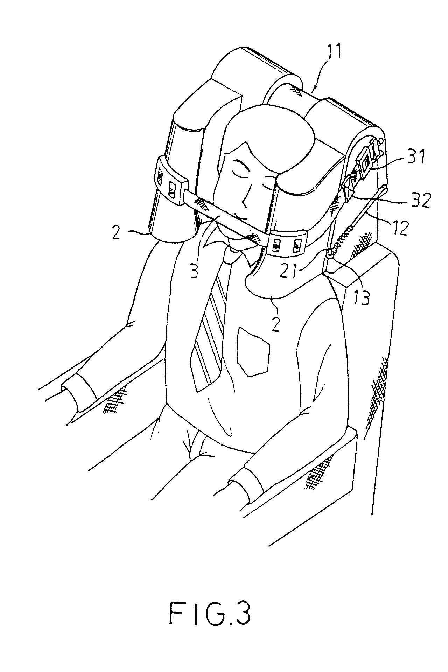

The advantages of the safety nap cushion of the present invention are as follows:
1. The side cushions 2 have a curved inner surface which is designed to follow the general configuration of a man's head so that they can fitly contact with the user's cheeks. The retaining strap 3 is length-adjustable and thereby can also help the side cushions 2 to fitly contact the user's cheeks and prevent the same from falling aslant to one side.
2. The retaining strap 3 is detachably attached to the back cushion 1 by means of the two buckles 31, and the back cushion 1 is suitable for putting over the user's head through the opening 11 and can therefore be used as an inflatable life jacket.
3. The side cushions 2 are provided with air inlets from which the cushions can be inflated manually.
4. For people who usually sleep with their heads slightly incline sideward, the retaining strap 3 may be adjusted to be longer and accordingly looser to loosen the two side cushions 2, as shown in Fig. 3. Moreover, the back cushion 1 can be designed to be inflatable for easy collaps and convenient storage and carry.

The above embodiment is only used for illustration and is not intended to limit the scope of the present invention. Many modifications of the embodiment can be made without departing from the spirit of the present invention.

## Claims

1. A safety nap cushion for use with a chair back comprising a reverse U-shaped soft back cushion (1) including a front portion and a rear portion, two properly curved inflatable side cushions (2), and a pivotally turnable retaining strap (3) connected at two lower ends to two outer side surfaces of said rear portion of said back cushion by means of buckles (31);
said back cushion (1) being provided at each lateral side of said rear portion with at least one string member (12) for releasebly connecting said front portion to said rear portion.

2. The cushion according to claim 1, wherein each string member is provided with a hook member (13) connected to a free end thereof, and each lateral side of said front portion is provided with at least one retaining ring (21) corresponding to and for receiving said string member (12) and hook member (13) on said rear portion.

3. The cushion according to claim 1, wherein said back cushion (1) is provided at each lateral side of said rear portion with two string members (12) which each has a hook member (13) connected to a free end thereof and each lateral side of said front portion being provided with two retaining rings (21) corresponding to and for receiving said two string members and hook members (13) on said rear portion.

4. The cushion according to claim 1, 2 or 3, wherein said two side cushions (2) are thermally sealed to a top surface of said front portion of said back cushion (1) at each side thereof.

5. The cushion according to claim 1, wherein said retaining strap (3) is detachably fixed at two lower ends to points adequately above said string member (12) and being provided with an adjusting buckle (32) to adjust the length of said retaining strap itself so that said retaining strap (3) can be pivotally turned to be in front of said two side cushions (2) to fitly confine said side cushions to contact with the user's two cheeks.

6. The cushion according to claim 3, wherein said retaining strap (3) is detachably fixed at two lower ends to points adequately above said two pairs of string members (12) and being provided with an adjusting buckle (32) to adjust the length of said retaining strap (3) itself so that said retaining strap (3) can be pivotally turned to be in front of said two side cushions (2) to fitly confine said side cushions to contact with the user's two cheeks.

7. The cushion according to claim 1, wherein each of said side cushions (2) has a properly curved inner side surface and being so designed that a smooth curve is formed at a lower joint between said back cushion and said two side cushions (2).

8. A safety nap cushion for use with a chair back as claimed in claim 1, wherein said back cushion has a through opening (11) formed at a predetermined position between said front and said rear portions thereof for a user's head to pass through.

9. A safety nap cushion for use with a chair back comprising a reverse U-shaped soft back cushion including a front portion and a rear portion, two properly curved inflatable side cushions being thermally sealed to a top surface of said front portion of said back cushion at each side thereof, and a pivotally turnable retaining strap connected at two lower ends to two outer side surfaces of said rear portion of said back cushion by means of buckles;
said back cushion being provided at each lateral side of said rear portion with two string members which each has a hook member connected to a free end thereof, and at each lateral side of said front portion with two retaining rings corresponding to and for receiving said two string members and hook members on said rear portion;
said retaining strap being detachably fixed at two lower ends to points adequately above said two pairs of string members and being provided with an adjusting buckle to adjust the length of said retaining strap itself so that said retaining strap can be pivotally turned to be in front of said two side cushions to fitly confine said side cushions to contact with the user's two cheeks; and
said side cushions each having a properly curved inner side surface and being so designed that a smooth curve is formed at a lower joint between said back cushion and said two side cushions.
